# FASCICULE DE BREVET EUROPEEN

(11) **EP 3 408 592 B1**
(45) Date de publication et mention de la délivrance du brevet: **03.06.2020**
(21) Numéro de dépôt: 17700477.7
(22) Date de dépôt: 02.01.2017
(51) Int. Cl.: F24D 19/10, G01F 15/06, G01F 15/075

(54) **DETECTION ET QUANTIFICATION D'USAGES D'EAU CHAUDE SANITAIRE**
NACHWEIS UND QUANTIFIZIERUNG DES WARMWASSERVERBRAUCHS IN HAUSHALTEN
DETECTION AND QUANTIFICATION OF DOMESTIC HOT WATER USE

(30) Priorité: 25.01.2016 FR 1650552
(43) Date de publication de la demande: 05.12.2018
(73) Titulaire: SUEZ Groupe, 92040 Paris la Défense Cedex (FR)
(72) Inventeur: HAEFFNER, Hugues, 92100 Boulogne Billancourt (FR)
(74) Mandataire: IPAZ
(86) Numéro de dépôt international: PCT/EP2017/050007
(87) Numéro de publication internationale: WO 2017/129378

(56) Documents cités:
- WO-A1-2011/152784
- WO-A1-2014/064556
- GB-A- 2 434 207

## Description

### Domaine de l'invention

L'invention appartient au domaine de l'analyse de données de consommations d'eau par un particulier.

Plus spécifiquement, la présente invention concerne un procédé et un dispositif permettant de détecter et de quantifier l'usage d'eau chaude sanitaire d'un équipement utilisant de l'eau au cours d'une durée de référence.

### Etat de la technique antérieure

On connaît des procédés de détection et de quantification d'usage d'eau chaude sanitaire d'un équipement utilisant de l'eau à partir de dispositifs installés en amont et en série au niveau de cet équipement. Il est ainsi connu d'installer un compteur d'eau au niveau de la canalisation alimentant une douche en eau chaude pour réaliser la détection et la quantification d'usage d'eau chaude de cette douche.

L'installation d'un tel compteur nécessite une intervention sur le réseau de distribution au plus près de l'équipement. Cette intervention génère des dépenses en équipements, et nécessite d'obtenir une autorisation d'intervention et d'arrêter temporairement le réseau de distribution en eau chaude.

GB 2 434 207 A divulgue par exemple un dispositif pour quantifier la consommation d'eau chaude sanitaire suivant l'état de la technique antérieure.

L'invention a notamment pour but de remédier à tout ou partie des inconvénients des techniques de la technique antérieure.

### Exposé de l'invention

On atteint un but de l'invention avec, selon un premier aspect de l'invention, un procédé de détection d'usage d'eau chaude sanitaire par un équipement utilisant de l'eau au cours d'une durée de référence par analyse de données relatives à des volumes d'eau traversant un compteur d'eau disposé en amont d'un réseau de distribution alimentant ledit équipement, ledit procédé comprenant :
- une première étape de réception d'une première donnée, notée *VΔ*1, représentant le volume maximal de fluide mesuré par le compteur pendant une durée prédéterminée, dite petite durée, au cours de la durée de référence, la petite durée, notée *Δ*1, étant comprise entre 2,0 et 7,0 minutes, et de préférence sensiblement égale à 5 minutes,
- une deuxième étape de réception d'une deuxième donnée, notée *VΔ*2, représentant le volume maximal de fluide mesuré par le compteur pendant une autre durée prédéterminée, dite grande durée, au cours de la durée de référence, la grande durée, notée *Δ*2, étant comprise entre 10,0 et 30,0 minutes, et de préférence égale à 15 minutes,

- une étape de détection d'un usage d'eau chaude sanitaire, un usage d'eau chaude sanitaire étant dit « détecté » lorsque :
   o d'une part, une première condition est vérifiée, selon laquelle la première donnée *VΔ*1 est supérieure ou égal à un premier seuil caractéristique choisi entre 10 et 20 litres, et
   o d'autre part, une deuxième condition est vérifiée, selon laquelle la deuxième donnée *VΔ*2 est supérieure ou égale à un deuxième seuil caractéristique, ledit deuxième seuil caractéristique étant supérieur ou égal au premier seuil caractéristique.

De préférence, le premier seuil caractéristique est compris entre 4 + 2 x *Δ*1 et 8 + 2 x *Δ*1.

Avantageusement, le deuxième seuil caractéristique est compris entre 15 et 25 litres, de préférence sensiblement égal à 20 litres.

La première condition porte sur le volume consommé pendant la petite durée et est définie pour dissocier l'usage d'eau chaude sanitaire des autres usages ponctuels. La durée *Δ*1 peut être choisie comme supérieure à la durée des usages ponctuels, typiquement de 2 minutes, et inférieure à la durée d'usage d'eau chaude sanitaire, typiquement entre 2 et 7 minutes.

La deuxième condition assure que le volume consommé est suffisamment important pour correspondre à un usage d'eau chaude sanitaire du fait que la durée *Δ*2 est supérieure à la durée totale de l'usage d'eau chaude sanitaire.

L'étape de réception de la première donnée peut avoir lieu avant ou après l'étape de réception de la deuxième donnée. Les deux étapes de réception peuvent aussi avoir lieu de manière concomitante. Par exemple, les première et deuxième données peuvent être reçues dans une trame de données par des moyens de réception d'un serveur.

Les première et deuxième données peuvent être générées par le compteur disposé en amont du réseau de distribution. Ce compteur est appelé compteur général dans la littérature.

Le compteur disposé en amont du réseau de distribution peut comprendre des moyens d'émissions configurés pour émettre les première et deuxième données.

Typiquement, la petite et la grande durée du compteur général sont respectivement de cinq minutes et de quinze minutes.

De préférence, l'étape de détection (E2) d'un usage d'eau chaude sanitaire comporte en outre la vérification d'une troisième condition selon laquelle un usage d'eau chaude sanitaire est détecté lorsque le rapport (*VΔ*2 × *Δ*1) / (*VΔ*1 × *Δ*2) est sensiblement inférieur à 1, par exemple inférieur à un seuil compris entre 0,8 et 0,9.

Cette troisième condition permet de dissocier l'usage d'eau chaude sanitaire d'usages très longs d'une durée supérieure à *Δ*2 ne correspondant pas à l'eau chaude sanitaire tel que le remplissage d'une piscine, un arrosage, un lavage à grande eau.

Le procédé selon l'invention peut comporter une détermination du débit d'eau chaude sanitaire au cours de la durée de référence à partir de la première donnée, le débit d'eau chaude sanitaire étant déterminé par le rapport du volume maximal de fluide *VΔ*1 sur la durée *Δ*1.

Le procédé selon l'invention peut comporter une détermination du volume d'eau chaude sanitaire utilisé par l'équipement lors d'un usage pendant la période de référence à partir de la deuxième donnée, le volume d'eau chaude sanitaire étant déterminé par le volume maximal de fluide *VΔ*2.

Selon un deuxième aspect de l'invention, il est proposé un procédé comportant une itération du procédé qui vient d'être décrit et un traitement statistique des données de débits et volumes sanitaires d'eau ainsi déterminés pour déterminer un estimateur de la moyenne du débit et du volume d'eau chaude sanitaire consommé par l'équipement lors d'un usage moyen. Ce nombre d'itérations peut être par exemple supérieur à 7 pour disposer de suffisamment d'événements détectés et inférieur à 60 pour concerner une période homogène d'usage.

Un estimateur de la moyenne des débits et volumes consommés peut être déterminé par exemple en calculant la moyenne des débits et volumes consommés ou bien la médiane des débits et volumes consommés, ou bien un percentile des débits et volumes consommés.

Bien entendu, le traitement statistique peut déterminer d'autres données statistiques, telles que par exemple un moment d'ordre supérieur à 2 des débits et volumes consommés ou encore un percentile.

Selon un troisième aspect de l'invention, il est proposé un dispositif de détection d'usage d'eau chaude sanitaire par un équipement utilisant de l'eau au cours d'une durée de référence par analyse de données relatives à des volumes d'eau traversant un compteur d'eau disposé en amont d'un réseau de distribution alimentant ledit équipement, ledit dispositif comprenant :
- un premier module de réception d'une première donnée, notée *VΔ*1, représentant le volume maximal de fluide mesuré par le compteur pendant une durée prédéterminée, dite petite durée, au cours de la durée de référence, la petite durée, notée *Δ*1, étant comprise entre 2,0 et 7,0 minutes, et de préférence sensiblement égale à 5 minutes,
- un deuxième module de réception configuré pour recevoir une deuxième donnée, notée *VΔ*2, représentant le volume maximal de fluide mesuré par le compteur pendant une autre durée prédéterminée, dite grande durée, au cours de la durée de référence, la grande durée, notée *Δ*2, étant comprise entre 10,0 et 30,0 minutes, et de préférence égale à 15 minutes,
- un module de détection d'un usage d'eau chaude sanitaire configuré pour détecter un usage d'eau chaude sanitaire lorsque :
   o d'une part, une première condition est vérifiée, selon laquelle la première donnée *VΔ*1 est supérieure ou égal à un premier seuil caractéristique choisi entre 10 et 20 litres, et
   o d'autre part, une deuxième condition est vérifiée, selon laquelle la deuxième donnée *VΔ*2 est supérieure ou égale à un deuxième seuil caractéristique, ledit deuxième seuil caractéristique étant supérieur ou égal au premier seuil caractéristique.

Les modules de réceptions peuvent décoder des données reçues par des récepteurs, avec ou sans fil. Ils peuvent être distincts ou bien être réalisés par un unique module de réception qui est configuré pour recevoir les première et deuxième données.

Le module de détection peut être réalisé par une unité de traitement, par exemple un microprocesseur.

De préférence, le premier seuil caractéristique est compris entre 4 + 2 x *Δ*1 et 8 + 2 x *Δ*1.

Avantageusement, le deuxième seuil caractéristique est compris entre 15 et 25 litres, de préférence sensiblement égal à 20 litres.

Dans un mode de réalisation, la petite durée est comprise entre 2,0 et 7,0 minutes, et de préférence sensiblement égale à 5 minutes, et la grande durée est comprise entre 10,0 et 30,0 minutes, et de préférence égale à 15 minutes.

De préférence, le module de détection d'usage d'eau chaude sanitaire est en outre configuré pour vérifier une troisième condition selon laquelle un usage d'eau chaude sanitaire est détecté lorsque le rapport (*VΔ*2 × *Δ*1) / (*VΔ1* × *Δ*2) est sensiblement inférieur à 1.

De manière avantageuse, le rapport (*VΔ*2 × *Δ*1) / (*VΔ*1 × *Δ*2) est inférieur à un seuil compris entre 0,8 et 0,9.

De préférence, le dispositif comprend en outre un module de détermination du débit d'eau chaude sanitaire et/ou du volume d'eau chaude sanitaire utilisé par l'équipement au cours de la durée de référence configuré pour déterminer lesdits débit et volume à partir des première et deuxième données, le débit d'eau chaude sanitaire étant déterminé par le rapport du volume maximal de fluide *VΔ*1 sur la durée *Δ*1, le volume d'eau chaude sanitaire étant déterminé par le volume maximal de fluide *VΔ*2.

Selon un quatrième aspect de l'invention, il est proposé un système comprenant :
- au moins un équipement utilisant de l'eau au cours d'une durée de référence ;
- un compteur d'eau disposé en amont d'un réseau de distribution alimentant l'équipement ;
- un serveur configuré pour recevoir des données émises par le compteur d'eau ;
- un dispositif selon l'invention, de préférence intégré au serveur.

Un module de réception du serveur, usuellement configuré pour recevoir les données émises par le compteur, peut être configuré pour réaliser les fonctions des modules de réceptions du dispositif selon l'invention.

Alternativement, le ou les modules de réception du dispositif selon l'invention peuvent être distincts d'un module de réception du serveur.

Un module de traitement du serveur, par exemple un microprocesseur, usuellement configuré pour traiter des données émises par le compteur, peut être configuré pour réaliser les fonctions du module de détection du dispositif selon l'invention et/ou du module de détermination du débit d'eau chaude sanitaire et/ou du volume d'eau chaude sanitaire.

Selon encore un autre aspect de l'invention, il est proposé un produit programme d'ordinateur chargeable directement dans la mémoire interne d'un ordinateur, comprenant des portions de code de logiciel pour l'exécution des étapes du procédé selon l'une des revendications précédentes, lorsque le programme est exécuté sur un ordinateur.

### Description des figures

D'autres particularités et avantages de l'invention apparaîtront à la lecture de la description détaillée de mises en œuvre et de modes de réalisation nullement limitatifs, au regard de figures annexées sur lesquelles :
- la figure 1 illustre un système selon l'invention ;
- la figure 2 illustre un procédé selon l'invention mis en œuvre dans le système représenté sur la figure 1.

### Description de l'invention

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

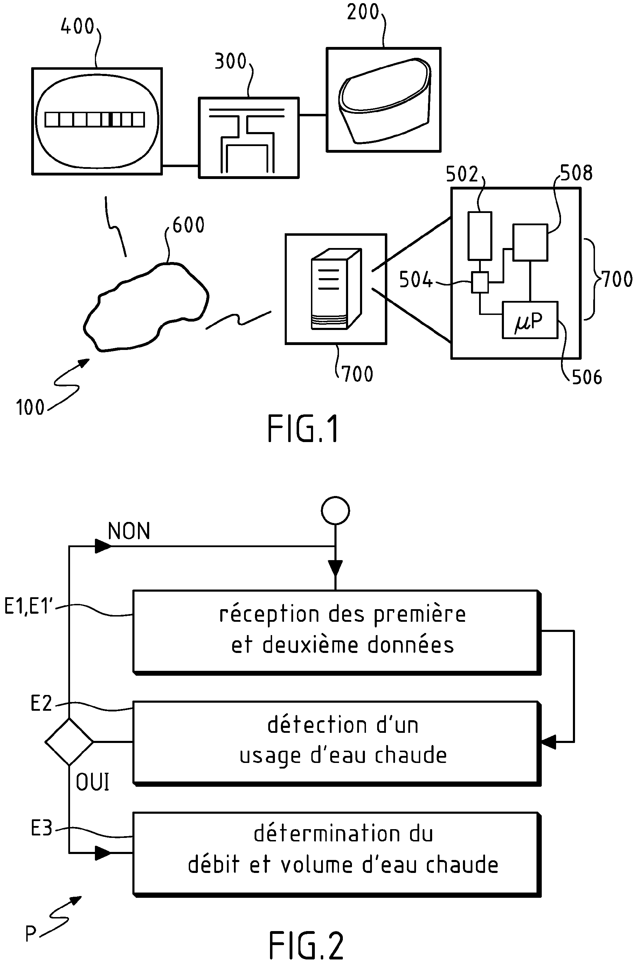

Dans l'exemple représenté sur la figure 1, il est illustré un système 100 selon l'invention comprenant :
- un équipement 200 utilisant de l'eau chaude sanitaire, ici une baignoire, alimentée par un réseau de distribution 300 ;
- un compteur d'eau 400 disposé en amont du réseau de distribution 300 alimentant la baignoire 200 ;
- un serveur 500 configuré pour recevoir des données émises par le compteur d'eau 400 au moyen d'un réseau 600 ;
- un dispositif de détection d'usage d'eau chaude sanitaire 700 intégré au serveur dans cet exemple de réalisation. Le dispositif 700 pouvant être logé ailleurs que dans le serveur.

La durée de référence est, dans l'exemple représenté, de 24 heures.

Le réseau 600 est typiquement un réseau radio. Dans ce cas, de manière non davantage représentée, le compteur d'eau 400 comporte un transducteur capable de convertir un signal mécanique généré par le déplacement de fluide en un signal électrique émis par un émetteur radio disposé au sein du compteur d'eau.

Le signal émis par le compteur d'eau est alors propagé par le réseau 600 et reçu par le serveur 500 au moyen d'un récepteur radio.

Usuellement le compteur 400 génère une trame de données comportant deux volumes de consommation maximale, respectivement sur 5 et 15 minutes au cours de la durée de référence. Cette trame est reçue par une unité de réception 502 du serveur 500, telle qu'une carte réseau 502.

Le serveur comprend un module de réception 504 qui est configuré pour recevoir les données émises par le compteur 400.

Le serveur comprend en outre un microprocesseur 506 qui est configuré pour traiter des données émises par le compteur 400 et reçues via le module de réception 504.

Dans l'exemple représenté, le dispositif 700 comprend un module de réception 508 configuré pour :
- recevoir une première donnée représentant le volume maximal de fluide, notée *VΔ*1, mesuré par le compteur 400 pendant la durée de 5 minutes,
- recevoir une deuxième donnée représentant le volume maximal de fluide, notée *VΔ*2, mesuré par le compteur 400 pendant la durée de 15 minutes.

Le microprocesseur 506 est en outre configuré pour traiter les premières et deuxième données reçues du module de réception 508. Le microprocesseur 506 fait partie du dispositif 700 dans le mode de réalisation illustré.

En référence à la figure 2, il est illustré un procédé selon l'invention mis en oeuvre par le système selon l'invention.

Selon ce procédé, il est mis en œuvre une itération, sur quarante jours, d'un procédé P de détermination de débit et de volume d'eau chaude sanitaire qui va être décrit ci-après et un traitement statistique des données de débits et volumes sanitaires d'eau déterminés pour déterminer un estimateur du débit et du volume d'eau chaude sanitaire consommé par l'équipement au cours de la durée de référence de 24 heures.

Le procédé P de détermination de débit et de volume d'eau chaude sanitaire comprend :
- une réception E1 et E1' des première et deuxième données par le module de réception 508,
- une détection E2 d'un usage d'eau chaude sanitaire,
- si une détection E2 est positive, une détermination E3 du débit et du volume d'eau chaude sanitaire consommé,
- sinon un retour à l'étape de réception E1.

L'unité de traitement 506 est configurée pour réaliser la détection E2 comprend, dans l'exemple représenté, les trois tests suivants :
- test 1 : *VΔ*1 ≥ 15 ;
- test 2 : *VΔ*2 ≥ 20 ; et
- test 3 : 5 *VΔ*2/15 *VΔ*1 ≤ 12/15.

Le premier test a pour objectif de vérifier que le débit est suffisant pour caractériser un usage d'eau chaude sanitaire. Le deuxième test a pour objectif de vérifier que le volume d'eau consommé est suffisant pour caractériser un usage d'eau chaude sanitaire. Le troisième test a pour objectif de vérifier que la durée de l'usage est inférieure à 12 minutes, ce qui correspond, selon l'invention, à une durée maximale d'usage d'eau chaude sanitaire.

L'unité de traitement 506 est configurée pour réaliser l'étape E3, selon laquelle le débit d'eau chaude sanitaire est déterminé par le rapport du volume maximal de fluide *VΔ*1 sur la durée *Δ*1, le volume d'eau chaude sanitaire étant déterminé par le volume maximal de fluide *VΔ*2.

Le traitement statistique des données de débits et volumes sanitaires d'eau déterminées est réalisé par l'unité de traitement 506 et permet de déterminer un estimateur de la moyenne du débit et du volume d'eau chaude sanitaire consommé par l'équipement lors d'un usage moyen.

Selon le procédé P qui vient d'être décrit, l'étape E1 est mise en œuvre dès que le serveur reçoit de nouvelles données via le module de réception 504, lui-même relié à la carte réseau 502. C'est donc un procédé qui est mis en œuvre en temps réel.

On peut toutefois facilement adapter le procédé décrit, sans sortir du cadre de l'invention, en considérant un module de réception 504 relié à une base de données qui comprendrait des première et deuxième valeurs préalablement enregistrées.

Selon un mode de réalisation de l'invention, il est proposé un produit programme d'ordinateur chargeable directement dans la mémoire interne d'un ordinateur, comprenant des portions de code de logiciel pour l'exécution des étapes du procédé selon l'une des revendications précédentes, lorsque le programme est exécuté sur un ordinateur.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé (P) de détection d'usage d'eau chaude sanitaire par un équipement (200) utilisant de l'eau au cours d'une durée de référence par analyse de données relatives à des volumes d'eau traversant un compteur d'eau (400) disposé en amont d'un réseau de distribution (300) alimentant ledit équipement, ledit procédé comprenant :
- une première étape de réception (E1) d'une première donnée, notée *VΔ*1 , représentant le volume maximal de fluide mesuré par le compteur pendant une première durée prédéterminée, dite petite durée, notée *Δ*1, au cours de la durée de référence,
- une deuxième étape de réception (E1') d'une deuxième donnée, notée *VΔ*2 , représentant le volume maximal de fluide mesuré par le compteur pendant une deuxième durée prédéterminée, dite grande durée, notée *Δ*2, au cours de la durée de référence,
- une étape de détection (E2) d'un usage d'eau chaude sanitaire, un usage d'eau chaude sanitaire étant dit « détecté » lorsque :
o d'une part, une première condition est vérifiée, selon laquelle la première donnée *VΔ*1 est supérieure ou égal à un premier seuil caractéristique choisi entre 10 et 20 litres, et
o d'autre part, une deuxième condition est vérifiée, selon laquelle la deuxième donnée *VΔ*2 est supérieure ou égale à un deuxième seuil caractéristique, ledit deuxième seuil caractéristique étant supérieur ou égal au premier seuil caractéristique.

2. Procédé selon la revendication 1, dans lequel le premier seuil caractéristique est compris entre 4 + 2 x *Δ*1 et 8 + 2 x *Δ*1.

3. Procédé selon la revendication 1 ou 2, dans lequel le deuxième seuil caractéristique est compris entre 15 et 25 litres, de préférence sensiblement égal à 20 litres.

4. Procédé selon l'une quelconque des revendications 1 à 3, dans lequel la petite durée est comprise entre 2,0 et 7,0 minutes, et de préférence sensiblement égale à 5 minutes, et la grande durée est comprise entre 10,0 et 30,0 minutes, et de préférence égale à 15 minutes.

5. Procédé selon l'une quelconque des revendications 1 à 4, dans lequel l'étape de détection (E2) d'un usage d'eau chaude sanitaire comporte en outre la vérification d'une troisième condition selon laquelle un usage d'eau chaude sanitaire est détecté lorsque le rapport (*VΔ*2 × *Δ*1) / (*VΔ*1 × *Δ*2) est sensiblement inférieur à 1.

6. Procédé selon la revendication 5, dans lequel le rapport (*VΔ*2 × *Δ*1) / (*VΔ*1 × *Δ*2) est inférieur à un seuil compris entre 0,8 et 0,9.

7. Procédé selon l'une quelconque des revendications 1 à 6, comportant en outre une étape de détermination (E3) du débit d'eau chaude sanitaire et du volume d'eau chaude sanitaire utilisé par l'équipement au cours de la durée de référence à partir des première et deuxième données, le débit d'eau chaude sanitaire étant déterminé par le rapport du volume maximal de fluide *VΔ*1 sur la durée *Δ*1, le volume d'eau chaude sanitaire étant déterminé par le volume maximal de fluide *VΔ*2.

8. Procédé comportant une itération d'un procédé (P) selon la revendication 7 et un traitement statistique des données de débits et volumes sanitaires d'eau déterminés pour déterminer un estimateur du débit et du volume d'eau chaude sanitaire consommé par l'équipement lors d'un usage moyen de l'équipement.

9. Dispositif (700) de détection d'usage d'eau chaude sanitaire par un équipement utilisant de l'eau au cours d'une durée de référence par analyse de données relatives à des volumes d'eau traversant un compteur d'eau disposé en amont d'un réseau de distribution alimentant ledit équipement, ledit dispositif comprenant :
- un module de réception (508) configuré pour recevoir une première donnée, notée *VΔ*1, représentant le volume maximal de fluide mesuré par le compteur pendant une durée prédéterminée, dite petite durée, notée *Δ*1, au cours de la durée de référence,
- un module de réception (508) configuré pour recevoir une deuxième donnée, notée *VΔ*2, représentant le volume maximal de fluide mesuré par le compteur pendant une autre durée prédéterminée, dite grande durée, notée *Δ*2, au cours de la durée de référence,
- un module de détection (506) d'un usage d'eau chaude sanitaire configuré pour détecter un usage d'eau chaude sanitaire lorsque :
o d'une part, une première condition est vérifiée, selon laquelle la première donnée *VΔ*1 est supérieure ou égal à un premier seuil caractéristique choisi entre 10 et 20 litres, et
o d'autre part, une deuxième condition est vérifiée, selon laquelle la deuxième donnée *VΔ*2 est supérieure ou égale à un deuxième seuil caractéristique, ledit deuxième seuil caractéristique étant supérieur ou égal au premier seuil caractéristique.

10. Dispositif selon la revendication 9, dans lequel le premier seuil caractéristique est compris entre 4 + 2 x Δ1 et 8 + 2 x Δ1.

11. Dispositif selon la revendication 9 ou 10, dans lequel le deuxième seuil caractéristique est compris entre 15 et 25 litres, de préférence sensiblement égal à 20 litres.

12. Dispositif selon l'une quelconque des revendications 9 à 11, dans lequel la petite durée est comprise entre 2,0 et 7,0 minutes, et de préférence sensiblement égale à 5 minutes, et la grande durée est comprise entre 10,0 et 30,0 minutes, et de préférence égale à 15 minutes.

13. Dispositif l'une quelconque des revendications 9 à 12, dans lequel le module de détection d'usage d'eau chaude sanitaire est en outre configuré pour vérifier une troisième condition selon laquelle un usage d'eau chaude sanitaire est détecté lorsque le rapport (*VΔ*2 × *Δ*1) / (*VΔ*1 × *Δ*2) est sensiblement inférieur à 1.

14. Dispositif selon la revendication 13, dans lequel le rapport (*VΔ*2 × *Δ*1) / (*VΔ*1 × *Δ*2) est inférieur à un seuil compris entre 0,8 et 0,9.

15. Dispositif selon l'une quelconque des revendications 9 à 14, comportant en outre un module de détermination du débit d'eau chaude sanitaire et du volume d'eau chaude sanitaire utilisé par l'équipement au cours de la durée de référence configuré pour déterminer lesdits débit et volume à partir des première et deuxième données, le débit d'eau chaude sanitaire étant déterminé par le rapport du volume maximal de fluide *VΔ*1 sur la durée *Δ*1, le volume d'eau chaude sanitaire étant déterminé par le volume maximal de fluide *VΔ*2.

16. Système comprenant :
- au moins un équipement (200) utilisant de l'eau au cours d'une durée de référence ;
- un compteur d'eau (400) disposé en amont d'un réseau de distribution (300) alimentant ledit équipement ;
- un serveur (700) configuré pour recevoir des données émises par ledit compteur d'eau ;
- un dispositif (700) selon l'une quelconque des revendications 9 à 15, de préférence intégré au serveur.

17. Produit programme d'ordinateur chargeable directement dans la mémoire interne d'un ordinateur, comprenant des portions de code de logiciel pour l'exécution des étapes du procédé selon l'une des revendications 1 à 8, lorsque ledit programme est exécuté sur un ordinateur.

## Patentansprüche

1. Verfahren (P) zur Erfassung des Haushaltswarmwasserverbrauchs durch eine Einrichtung (200), welche Wasser im Verlauf einer Referenzzeitspanne verbraucht, mittels der Analyse von Daten, welche die Wasservolumen betreffen, die einen Wasserzähler (400) durchströmen, der stromaufwärts eines die Einrichtung (200) speisenden Verteilungsnetzes (300) angeordnet ist, wobei das Verfahren aufweist:
- einen ersten Schritt des Empfangens (E1) eines als VΔ1 bezeichneten ersten Datenelements, welches das maximale Fluidvolumen angibt, das von dem Zähler während einer ersten vorbestimmten Zeitspanne, die als kleine Zeitspanne, Δ1, bezeichnet wird, im Verlauf der Referenzzeitspanne gemessen wurde,
- einen zweiten Schritt des Empfangens (E1') eines als VΔ2 bezeichneten zweiten Datenelements, welches das maximale Fluidvolumen angibt, das von dem Zähler während einer zweiten vorbestimmten Zeitspanne, die als große Zeitspanne, Δ2, bezeichnet wird, im Verlauf der Referenzzeitspanne gemessen wurde,
- einen Schritt des Detektierens (E2) eines Haushaltswarmwasserverbrauchs, wobei ein Haushaltswarmwasserverbrauch als "detektiert" bezeichnet wird, wenn:
o einerseits eine erste Bedingung verifiziert ist, gemäß welcher das erste Datenelement VΔ1 größer als oder gleich einem ersten charakteristischen Schwellenwert ist, der zwischen 10 und 20 Litern gewählt ist, und
o andererseits eine zweite Bedingung verifiziert ist, gemäß welcher das zweite Datenelement VΔ2 größer als oder gleich einem zweiten charakteristischen Schwellenwert ist, wobei der zweite charakteristische Schwellenwert größer als oder gleich dem ersten charakteristischen Schwellenwert ist.

2. Verfahren nach Anspruch 1, bei welchem der erste charakteristische Schwellenwert zwischen 4 + 2 x Δ1 und 8 + 2 x Δ1 beträgt.

3. Verfahren nach Anspruch 1 oder 2, bei welchem der zweite charakteristische Schwellenwert zwischen 15 und 25 Liter beträgt, vorzugsweise im Wesentlichen gleich 20 Liter ist.

4. Verfahren nach einem der Ansprüche 1 bis 3, bei welchem die kleine Zeitspanne zwischen 2,0 und 7,0 Minuten beträgt und vorzugsweise im Wesentlichen gleich 5,0 Minuten ist, und die große Zeitspanne zwischen 10,0 und 30,0 Minuten beträgt, und vorzugsweise gleich 15 Minuten ist.

5. Verfahren nach einem der Ansprüche 1 bis 4, bei welchem der Schritt des Erfassens (E2) eines Haushaltswarmwasserverbrauchs ferner das Verifizieren einer dritten Bedingung aufweist, gemäß welcher ein Haushaltswarmwasserverbrauch detektiert wird, wenn das Verhältnis (VA2 x Δ1) / (VΔ1 x Δ2) im Wesentlichen kleiner als 1 ist.

6. Verfahren nach Anspruch 5, bei welchem das Verhältnis (VΔ2 x Δ1) / (VΔ1 x Δ2) kleiner als ein zwischen 0,8 und 0,9 liegender Schwellenwert ist.

7. Verfahren nach einem der Ansprüche 1 bis 6, ferner mit einem Schritt des Bestimmens (E3) der Durchflussmenge des Haushaltswarmwassers und des Volumens des von der Einrichtung innerhalb der Referenzzeitspanne verbrauchten Haushaltswarmwassers ausgehend von dem ersten und dem zweiten Datenelement, wobei die Durchflussmenge des Haushaltswarmwassers durch das Verhältnis des maximalen Fluidvolumens VΔ1 zu der Zeitspanne Δ1 bestimmt wird, wobei das Volumen des Haushaltswarmwassers durch das maximale Fluidvolumen VΔ2 bestimmt wird.

8. Verfahren mit einer Wiederholung eines Verfahrens (P) gemäß Anspruch 7 und einer statistischen Verarbeitung der Daten der Haushaltswasserdurchflussmengen und -volumina zur Bestimmung eines Schätzers für die Durchflussmenge und das Volumen des Haushaltswarmwassers, das von der Einrichtung bei einer durchschnittlichen Nutzung der Einrichtung verbraucht wird.

9. Vorrichtung (700) zur Detektion des Haushaltswarmwasserverbrauchs durch eine Einrichtung, welche Wasser im Verlauf einer Referenzzeitspanne verbraucht, mittels der Analyse von Daten, welche die Wasservolumen betreffen, die einen Wasserzähler (400) durchströmen, der stromaufwärts eines die Einrichtung (200) speisenden Verteilungsnetzes (300) angeordnet ist, wobei die Vorrichtung aufweist:
- ein Empfangsmodul (508), das dazu ausgebildet ist, ein als VΔ1 bezeichnetes erstes Datenelement zu empfangen, welches das maximale Fluidvolumen angibt, das von dem Zähler während einer ersten vorbestimmten Zeitspanne, die als kleine Zeitspanne, Δ1, bezeichnet wird, im Verlauf der Referenzzeitspanne gemessen wurde,
- ein Empfangsmodul (508), das dazu ausgebildet ist, ein als VΔ2 bezeichnetes zweites Datenelement zu empfangen, welches das maximale Fluidvolumen angibt, das von dem Zähler während einer zweiten vorbestimmten Zeitspanne, die als große Zeitspanne, Δ2, bezeichnet wird, im Verlauf der Referenzzeitspanne gemessen wurde,
- ein Modul (506) zum Detektieren eines Haushaltswarmwasserverbrauchs, das dazu ausgebildet ist, einen Haushaltswarmwasserverbrauch zu detektieren, wenn:
o einerseits eine erste Bedingung verifiziert ist, gemäß welcher das erste Datenelement VΔ1 größer als oder gleich einem ersten charakteristischen Schwellenwert ist, der zwischen 10 und 20 Litern gewählt ist, und
o andererseits eine zweite Bedingung verifiziert ist, gemäß welcher das zweite Datenelement VΔ2 größer als oder gleich einem zweiten charakteristischen Schwellenwert ist, wobei der zweite charakteristische Schwellenwert größer als oder gleich dem ersten charakteristischen Schwellenwert ist.

10. Vorrichtung nach Anspruch 9, bei welcher der erste charakteristische Schwellenwert zwischen 4 + 2 x Δ1 und 8 + 2 x Δ1 beträgt.

11. Vorrichtung nach Anspruch 9 oder 10, bei welcher der zweite charakteristische Schwellenwert zwischen 15 und 25 Liter beträgt, vorzugsweise im Wesentlichen gleich 20 Liter ist.

12. Vorrichtung nach einem der Ansprüche 9 bis 11, bei welcher die kleine Zeitspanne zwischen 2,0 und 7,0 Minuten beträgt und vorzugsweise gleich 5,0 Minuten ist, und die große Zeitspanne zwischen 10,0 und 30,0 Minuten beträgt, und vorzugsweise gleich 15 Minuten ist.

13. Vorrichtung nach einem der Ansprüche 9 bis 12, bei welcher das Modul zum Detektieren des Haushaltswarmwasserverbrauchs ferner dazu ausgebildet ist, eine dritte Bedingung zu verifizieren, gemäß welcher ein Haushaltswarmwasserverbrauch detektiert wird, wenn das Verhältnis (VΔ2 x Δ1) / (VΔ1 x Δ2) im Wesentlichen kleiner als 1 ist.

14. Vorrichtung nach Anspruch 13, bei welcher das Verhältnis (VΔ2 x Δ1) / (*VΔ*1 x Δ2) kleiner als ein zwischen 0,8 und 0,9 liegender Schwellenwert ist.

15. Vorrichtung nach einem der Ansprüche 9 bis 14, ferner mit einem Modul zum Bestimmen der Haushaltswarmwasserdurchflussmenge und des Haushaltswarmwasservolumens des von der Einrichtung innerhalb der zur Bestimmung der vorgenannten Durchflussmenge und des Volumens festgelegten Referenzzeitspanne verbrauchten Haushaltswarmwassers ausgehend von dem ersten und dem zweiten Datenelement, wobei die Durchflussmenge des Haushaltswarmwassers durch das Verhältnis des maximalen Fluidvolumens VΔ1 zu der Zeitspanne Δ1 bestimmt wird, wobei das Volumen des Haushaltswarmwassers durch das maximale Fluidvolumen V A2 bestimmt wird.

16. System mit:
- mindestens einer Einrichtung (200), welche Wasser im Verlauf einer Referenzzeitspanne verbraucht;
- einen Wasserzähler (400), der stromaufwärts eines die Einrichtung (200) speisenden Verteilungsnetzes (300) angeordnet ist;
- einem Server (700), der dazu ausgebildet ist, von dem Wasserzähler ausgegebene Daten zu empfangen;
- einer vorzugsweise in dem Server integrierten Vorrichtung (700) nach einem der Ansprüche 9 bis 15.

17. Computerprogrammprodukt, das direkt in den internen Speicher eines Computers ladbar ist, mit Softwarecodebereichen zur Ausführung von Schritten des Verfahrens nach einem der Ansprüche 1 bis 8, wenn das Programm auf einem Computer ausgeführt wird.

## Claims

1. A method (P) for detecting use of domestic hot water by an equipment (200) using water during a reference duration by analyzing data related to water volumes passing through a water meter (400) disposed upstream of a water distribution system (300) feeding said equipment, said method comprising:
- a first step of receiving (E1) a first datum, noted *VΔ*1, representing the maximum fluid volume measured by the water meter during a first predetermined duration, called a short duration, noted Δ1, during the reference duration,
- a second step of receiving (E1') a second datum, noted *VΔ*2, representing the maximum fluid volume measured by the water meter during a second predetermined duration, called a long duration, noted *Δ*2, during the reference duration,
- a step of detecting (E2) a use of domestic hot water, a use of domestic hot water being said "detected" when:
o on the one hand, a first condition is fulfilled, according to which the first datum *VΔ*1 is higher than or equal to a first characteristic threshold chosen between 10 and 20 litres, and
o on the other hand, a second condition is fulfilled, according to which the second datum *VΔ*2 is higher than or equal to a second characteristic threshold, said second characteristic threshold being higher than or equal to the first characteristic threshold.

2. The method according to claim 1, wherein the first characteristic threshold is between 4 + 2 x *Δ*1 and 8 + 2 x *Δ*1.

3. The method according to claim 1 or 2, wherein the second characteristic threshold is comprised between 15 and 25 litres, preferably substantially equal to 20 litres.

4. The method according to any of claims 1 to 3, wherein the short duration is between 2.0 and 7.0 minutes, and preferably substantially equal to 5 minutes, and the long duration is comprised between 10.0 and 30.0 minutes, and preferably equal to 15 minutes.

5. The method according to any of claims 1 to 4, wherein the step of detecting (E2) a use of domestic hot water further includes verifying a third condition according to which a use of domestic hot water is detected when the ratio (*VΔ*2 x *Δ*1) / (*VΔ*1 x *Δ*2) is substantially lower than 1.

6. The method according to claim 5, wherein the ratio (*VΔ*2 x *Δ*1*)*/*(VΔ*1 x *Δ*2) is lower than a threshold between 0.8 and 0.9.

7. The method according to any of claims 1 to 6, further including a step of determining (E3) the flow rate of domestic hot water and the volume of domestic hot water used by the equipment during the reference duration from the first and second data, the flow rate of domestic hot water being determined by the ratio of the maximum fluid volume *VΔ*1 to the duration *Δ*1, the volume of domestic hot water being determined by the maximum fluid volume *VΔ*2.

8. A method comprising iterating a method (P) according to claim 7 and statistically processing the data of domestic flow rates and volumes of water determined to determine an estimator of the rate and volume of domestic hot water flow consumed by the equipment during a mean use of the equipment.

9. A device (700) for detecting use of domestic hot water by an equipment using water during a reference duration by analyzing data related to water volumes passing through a water meter disposed upstream of a water distribution system feeding said equipment, said device comprising:
- a reception module (508) configured to receive a first datum, noted *VΔ*1, representing the maximum fluid volume measured by the water meter for a predetermined duration, called a short duration, noted *Δ*1, during the reference duration,
- a reception module (508) configured to receive a second datum, noted *VΔ*2, representing the maximum fluid volume measured by the water meter for another predetermined duration, called a long duration, noted *Δ2*, during the reference duration,
- a detection module (506) for detecting a use of domestic hot water configured to detect a use of domestic hot water when:
o on the one hand, a first condition is fulfilled, according to which the first datum *VΔ*1 is higher than or equal to a first characteristic threshold chosen between 10 and 20 litres, and
o on the other hand, a second condition is fulfilled, according to which the second datum *VΔ*2 is higher than or equal to a second characteristic threshold, said second characteristic threshold being higher than or equal to the first characteristic threshold.

10. The device according to claim 9, wherein the first characteristic threshold is between 4 + 2 x *Δ*1 and 8 + 2 x *Δ*1.

11. The device according to claim 9 or 10, wherein the second characteristic threshold is between 15 and 25 litres, preferably substantially equal to 20 litres.

12. The device according to any of claims 9 to 11, wherein the short duration is between 2.0 and 7.0 minutes, and preferably substantially equal to 5 minutes, and the long duration is between 10.0 and 30.0 minutes, and preferably equal to 15 minutes.

13. The device according to any of claims 9 to 12, wherein the detection module for detecting use of domestic hot water is further configured to verify a third condition according to which a use of domestic hot water is detected when the ratio (*VΔ*2 x *Δ*1) / (*VΔ*1 x *Δ*2) is substantially lower than 1.

14. The device according to claim 13, wherein the ratio (*VΔ*2 x *Δ*1*)*/*(VΔ*1 x *Δ*2) is lower than a threshold comprised between 0.8 and 0.9.

15. The device according to any of claims 9 to 14, further including a determination module for determining the domestic hot water flow rate and the domestic hot water volume used by the equipment during the reference duration configured to determine said flow rate and volume from the first and second data, the domestic hot water flow rate being determined by the ratio of the maximum fluid volume *VΔ*1 to the duration *Δ*1, the volume of domestic hot water being determined by the maximum fluid volume *VΔ*2.

16. A system comprising:
- at least one equipment (200) using water during a reference duration;
- a water meter (400) disposed upstream of a water distribution system (300) feeding said equipment;
- a server (700) configured to receive data emitted by said water meter;
- a device (700) according to any of claims 9 to 15, preferably integrated to the server.

17. A computer program product directly loadable in the internal memory of a computer, comprising software code portions for running the steps of the method according to one of claims 1 to 8, when said program is run on a computer.
